**Europäisches Patentamt**

**European Patent Office**

**Office européen des brevets**

(19)

(11) Veröffentlichungsnummer: **0 101 110 B1**

(12) **EUROPÄISCHE PATENTSCHRIFT**

(45) Veröffentlichungstag der Patentschrift:
29.01.86

(21) Anmeldenummer: 83201046.6

(22) Anmeldetag: 14.07.83

(51) Int. Cl.⁴: **C 01 B 17/76, C 01 B 17/80**

(54) Verfahren zur Herstellung von Schwefelsäure.

(30) Priorität: 12.08.82 DE 3230003
01.09.82 DE 3232446

(43) Veröffentlichungstag der Anmeldung:
22.02.84 Patentblatt 84/8

(45) Bekanntmachung des Hinweises auf die Patenterteilung:
29.01.86 Patentblatt 86/5

(84) Benannte Vertragsstaaten:
DE FR GB IT NL SE

(56) Entgegenhaltungen:
EP - B - 0 005 875
DE - A - 1 567 716
DE - A - 1 667 509
DE - A - 2 000 891
DE - B - 1 186 838
FR - A - 1 451 923
FR - A - 2 244 711
FR - A - 2 316 186
FR - A - 2 316 187
US - A - 4 008 316

(73) Patentinhaber: **METALLGESELLSCHAFT AG,**
**Reuterweg 14 Postfach 3724, D-6000 Frankfurt/M.1 (DE)**

(72) Erfinder: **Dittmar, Heinz, Heinrich-Heine-Strasse 18,**
**D-6360 Friedberg 5 (DE)**
Erfinder: **Beckmann, Manfred, Jean Philipp Anlage 17,**
**D-6078 Neu Isenburg (DE)**
Erfinder: **Dörr, Karl-Heinz, Am Gonsenheimer Spiess 6,**
**D-6500 Mainz (DE)**
Erfinder: **Rothe, Ulrich, Dr., Raimundstrasse 132,**
**D-6000 Frankfurt am Main (DE)**
Erfinder: **Sander, Ulrich, Dr., Taunusstrasse 116,**
**D-6382 Friedrichsdorf (DE)**

(74) Vertreter: **Fischer, Ernst, Dr., Reuterweg 14,**
**D-6000 Frankfurt am Main 1 (DE)**

ACTORUM AG

# Beschreibung

Die Erfindung betrifft ein Verfahren zur Herstellung von Schwefelsäure aus $SO_2$-haltigen Gasen durch katalytische Umsetzung von $SO_2$ zu $SO_3$, mehrstufige Kühlung der $SO_3$-haltigen Gase vor einer Absorption des $SO_3$ in konzentrierter Schwefelsäure, wobei Wärme aus dem Schwefelsäurekreislauf der Absorption durch indirekten Wärmeaustausch an ein Kühlmedium übertragen wird, das Kühlmedium im Kreislauf geführt wird, und aus dem Kreislauf des Kühlmediums Wärme durch indirekten Wärmeaustausch an einen Verbraucher abgeführt wird.

Die katalytische Umsetzung von $SO_2$ zu $SO_3$ erfolgt in der Praxis mit Katalysatoren auf der Basis von $V_2O_5$. Da die Reaktion exotherm verläuft, wird die Temperatur der Gase erhöht. Auch die Absorption des gebildeten $SO_3$ in konzentrierter Schwefelsäure verläuft exotherm, und die freigesetzte Absorptionswärme muss abgeführt werden. Aus Gründen der Wärmeökonomie ist es wichtig, die dabei anfallende, überschüssige Wärme zu verwerten. Da diese Wärme teilweise auf relativ niedrigem Temperaturniveau anfällt, ist jedoch eine wirtschaftliche Verwertung schwierig. Ausserdem muss sichergestellt werden, dass in den $SO_3$-haltigen Gasen vor dem Eintritt in den Absorber der Taupunkt nicht unterschritten wird, da auch getrocknete Kontaktgase noch — wenn auch nur geringe Mengen — Feuchtigkeit enthalten. Dies trifft sowohl für die Zwischenabsorption als auch für die Endabsorption zu. Es ist bekannt, die aus der ersten Kontaktstufe austretenden $SO_3$-haltigen Gase vor der Zwischenabsorption zweistufig abzukühlen, wobei in der ersten Stufe ein Wärmeaustausch mit den kälteren aus der Zwischenabsorption austretenden Gasen und in der zweiten Stufe ein Wärmeaustausch mit Speisewasser erfolgt (DE-PS 1 186 838, DE-PS 1 567 672). Aus der DE-PS 2 529 709, DE-OS 2 529 708 und DE-OS 2 824 010 ist es bekannt, die Wärme aus den Säurekreisläufen der Absorber durch indirekten Wärmeaustausch mit verdünnter Schwefelsäure oder Phosphorsäure abzuführen. Der Wärmeaustausch kann auch unter Zwischenschaltung eines geschlossenen Kreislaufes eines Kühlmediums aus Wasser, Öl oder anderen Medien erfolgen. Eine relativ hohe Temperatur des Kühlmediums erfordert einen relativ hohen Aufwand im Hinblick auf den Säure-Wärmeaustauscher. Bei der zweistufigen Abkühlung der $SO_3$-haltigen Gase vor dem Eintritt in die Absorption besteht die Gefahr der Unterschreitung des Taupunktes, wenn die Gaswärme weitgehend zur Aufheizung des Kühlmediums verwendet wird.

Der Erfindung liegt die Aufgabe zugrunde, in dem geschlossenen Wärmeübertragungs-Kreislauf zwischen Absorbersäure und Verbraucher die Temperatur des flüssigen Kühlmediums zu erhöhen oder etwa die gleiche Temperatur mit geringerem Aufwand zu erreichen, wobei überschüssige Wärme aus dem Kontaktsystem verwendet wird und die Unterschreitung des Taupunktes der $SO_3$-haltigen Gase mit Sicherheit vermieden wird.

Die Lösung dieser Aufgabe erfolgt erfindungsgemäss dadurch, dass die $SO_3$-haltigen Gase vor dem Eintritt in die Absorption zunächst durch indirekten Wärmeaustausch abgekühlt und dann durch indirekten Wärmeaustausch mit einem im geschlossenen Kreislauf geführten Kühlmedium (A) auf eine Temperatur kurz oberhalb des Taupunktes der $SO_3$-haltigen Gase abgekühlt werden, der Schwefelsäurekreislauf der Absorption durch indirekten Wärmeaustausch mit einem im geschlossenen Kreislauf geführten flüssigen Kühlmedium (B) abgekühlt wird, das aufgeheizte flüssige Kühlmedium (B) durch indirekten Wärmeaustausch mit dem aufgeheizten Kühlmedium (A) weiter aufgeheizt wird und das heisse Kühlmedium (B) durch indirekten Wärmeaustausch mit dem Verbraucher abgekühlt wird.

Die eingesetzten $SO_2$-haltigen Gase können trocken oder feucht sein. Eine $SO_3$-Absorption erfolgt immer nach der letzten Kontakthorde. Zusätzlich kann eine Zwischenabsorption erfolgen. Wenn mit Zwischenabsorption gearbeitet wird, erfolgt normalerweise die Zwischenabsorption nach der ersten Kontaktstufe und die Endabsorption nach der zweiten Kontaktstufe. Es können aber auch je eine Zwischenabsorption nach einer ersten und einer zweiten Kontaktstufe und dann die Endabsorption nach der dritten Kontaktstufe erfolgen. Die Arbeitsweise kann bei der Zwischenabsorption, der Endabsorption oder bei beiden Absorptionen durchgeführt werden. Im letzteren Fall werden die Kreisläufe der flüssigen Kühlmedien zwischen den Absorbern und dem Verbraucher getrennt geschaltet, wenn die Säuretemperaturen im Zwischen- und Endabsorber etwa gleich sind; ist die Säuretemperatur im Endabsorber niedriger als im Zwischenabsorber, dann kann das flüssige Kühlmedium (B) zunächst durch den Wärmeaustauscher der Säure des Endabsorbers und dann durch den Wärmeaustauscher der Säure des Zwischenabsorbers geleitet werden. Anschliessend können ein Teilstrom des aufgeheizten Kühlmediums (B) mit dem Kühlmedium (A) des Zwischenabsorbers und ein anderer Teilstrom mit dem Kühlmedium (A) des Endabsorbers weiter aufgeheizt und beide Teilströme dann wieder vereinigt werden. Es ist auch möglich, das gesamte aufgeheizte Kühlmedium (B) nur mit einem Kühlmedium (A) oder mit beiden Kühlmedien (A) hintereinander weiter aufzuheizen. Das flüssige Kühlmedium (B) kann aus Druckwasser oder anderen Flüssigkeiten, wie z.B. Öl, bestehen. Das Kühlmedium (A) kann ebenfalls aus Flüssigkeiten oder aus Gasen bestehen. Als Verbraucher können Verfahren angeschlossen werden, die nur eine Wärme mit dem vorliegenden Temperaturniveau benötigen oder die Wärme mit höherem Temperaturniveau benötigen und bei denen dann eine weitere Aufheizung erfolgt. In der ersten Kühlstufe der $SO_3$-haltigen Gase vor der Absorption erfolgt bei der Verarbeitung von kalt anfallenden $SO_2$-haltigen Gasen eine Aufheizung von $SO_2$-haltigen Gasen vor der katalytischen Umsetzung. Bei einer Zwischenabsorption werden in dieser Kühlstufe im allgemeinen die aus dem Kontaktkessel austre-

tenden heissen $SO_3$-haltigen Gase im Wärmeaustausch mit den kälteren, aus der Zwischenabsorption austretenden Gasen gekühlt und letztere dabei auf die Arbeitstemperatur der nächsten Kontakthorde aufgeheizt. Bei der Verarbeitung von heiss anfallenden $SO_2$-haltigen Gasen – z.B. von einer Schwefelverbrennung – erfolgt in der ersten Kühlstufe vor einer Zwischenabsorption im allgemeinen die oben beschriebene Arbeitsweise. Vor einer Endabsorption werden im allgemeinen Speisewasser-Vorwärmer eingesetzt. Durch Regelung der Umlaufmenge des Kühlmediums im Kreislauf (A) wird das Temperaturniveau dieses Kühlmediums so gesteuert, dass ein maximaler Wärmeentzug ohne Unterschreitung des Taupunktes der Gase erfolgt. Die Wärmeaustauscher können im Gegen- oder Gleichstrom betrieben werden.

Eine vorzugsweise Ausgestaltung besteht darin, dass das flüssige Medium (B) aus Druckwasser besteht. Dadurch wird ein guter Wärmeübergang mit geringem Aufwand erzielt. Der Druck im Kühlkreislauf wird so hoch eingestellt, dass bei der Aufheizung keine Verdampfung erfolgt.

Eine vorzugsweise Ausgestaltung besteht darin, dass das Kühlmedium (A) aus Druckwasser besteht. Dabei kann der Druck im Kühlkreislauf so eingestellt werden, dass bei der Aufheizung entweder keine Wasserverdampfung oder aber eine vollständige Verdampfung erfolgt. Der Wärmeinhalt des Dampfes kann vollständig zur Aufheizung des Kühlmediums (B) verwendet werden.

Eine vorzugsweise Ausgestaltung besteht darin, dass das Druckwasser des Kühlmediums (A) beim indirekten Wärmeaustausch vollständig verdampft wird und der Dampf durch den indirekten Wärmeaustausch mit dem Kühlmedium (B) kondensiert wird. Dadurch kann die im Kreislauf umgepumpte Menge des Kühlmediums (A) sehr wesentlich vermindert und es können entsprechende Einsparungen an Pump-Energie erzielt werden.

Eine vorzugsweise Ausgestaltung besteht darin, dass das Druckwasser des Kühlmediums (A) beim indirekten Wärmeaustausch vollständig verdampft wird, der Dampf im Wärmeaustausch mit einem zweiten Verbraucher kondensiert wird und das heisse Kondensat zur Aufheizung des Kühlmediums (B) verwendet wird. Dadurch kann ein Teil der Wärme des Kühlmediums (A) auf höherem Temperaturniveau genutzt werden.

Eine vorzugsweise Ausgestaltung besteht darin, dass das Kühlmedium (A) mit einer Temperatur von 120 bis 180°C in den indirekten Wärmeaustausch mit den $SO_3$-haltigen Gasen eingeleitet und im Gegenstrom geführt wird. Dadurch wird erreicht, dass ein guter Wärmeübergang erzielt und eine Kondensation von Schwefelsäure im Gasstrom vor dem Eintritt in den $SO_3$-Absorber mit Sicherheit vermieden wird.

Eine vorzugsweise Ausgestaltung besteht darin, dass bei einer kalt betriebenen Endabsorption das Kühlmedium (B) mit dem Schwefelsäurekreislauf des Zwischenabsorbers aufgeheizt wird und anschliessend mit dem Kühlmedium (A) der Endabsorption und dem Kühlmedium (A) der Zwischenabsorption weiter aufgeheizt wird. Dadurch kann in einfacher Weise eine maximale Temperatur des Kühlmediums vor dem Eintritt in den Wärmeaustauscher des Verbrauchers erzielt werden. Unter kalter Absorption ist eine Absorption zu verstehen, bei der die Temperatur der aus dem Absorber ablaufenden Säure nicht höher liegt als die Temperatur des Kühlmediums (B) nach dem Wärmeaustausch mit dem Verbraucher. Die Aufheizung des Kühlmediums (B) mit den Kühlmedien (A) kann in Serienschaltung erfolgen – insbesondere bei unterschiedlichem Temperaturniveau der Kühlmedien (A) –, oder das Kühlmedium (B) wird in Teilströme aufgeteilt, die parallel durch die beiden Wärmeaustauscher geführt und vor dem Verbraucher wieder vereinigt werden.

Eine vorzugsweise Ausgestaltung besteht darin, dass das Kühlmedium (B) vor der Aufheizung mit dem Schwefelsäurekreislauf der Zwischenabsorption zuerst mit dem Schwefelsäurekreislauf der Endabsorption aufgeheizt wird. Dadurch kann auch noch die auf relativ niedrigem Temperaturniveau anfallende Wärme des Säurekreislaufes des Endabsorbers verwertet werden.

Eine vorzugsweise Ausgestaltung besteht darin, dass das aufgeheizte Druckwasser (B) beim Verbraucher adiabatisch entspannt wird und der dabei gebildete Wasserdampf im Wärmeaustauscher des Verbrauchers kondensiert wird. Die adiabatische Entspannung erfolgt am Ort des Verbrauchers, um einen möglichst kurzen Weg für den dabei gebildeten Wasserdampf zu haben. Es ergibt sich dadurch ein besserer Wärmeübergang gegenüber einem Kontakt mit Druckwasser mit der Folge, entweder mit einer kleineren Heizfläche beim Verbraucher auszukommen oder bei zu Ansätzen neigenden Medien des Verbrauchers bei gleicher Heizfläche eine längere Laufzeit zu erreichen, bis eine Heizflächenreinigung auf der Verbraucherseite erforderlich wird.

Eine vorzugsweise Ausgestaltung besteht darin, dass die adiabatische Entspannung des Druckwassers in mehreren, im Wasserkreislauf hintereinandergeschalteten Stufen erfolgt und der in den einzelnen Stufen erzeugte Wasserdampf getrennt in separaten Wärmeaustauschern von Verbrauchern kondensiert wird. Dadurch kann die vorhandene Energie des Druckwassers (B) abgestuft – teilweise bei hoher Temperatur – ausgenutzt werden.

Eine vorzugsweise Ausgestaltung besteht darin, dass die Wärmeaustauscher des Verbrauchers hintereinandergeschaltet werden und das Wärmeenergie aufnehmende Medium des Verbrauchers die Wärmeaustauscher in Richtung steigender Temperatur des Wärmeenergie aufnehmenden Mediums im Gegenstrom zum Medium (B) durchläuft. Bei diesem Gegenstrom zwischen Druckwasser (B) und Medium des Verbrauchers ergibt sich eine weit niedrigere Temperatur des Druckwassers nach der Energieabgabe an den Verbraucher als bei Gleichstrom. Dadurch ergeben sich wessentliche Vorteile infolge geringerer umzupumpender Mengen an Druckwasser (B) sowie die Möglichkeit zu höherer Aufkonzentrierung von

Lösungen, falls der Verbraucher zum Eindampfen von Lösungen dient.

Eine vorzugsweise Ausgestaltung besteht darin, dass das im Wärmeaustauscher des Verbrauchers anfallende Kondensat gesammelt, auf Reinheit geprüft und nur bei Reinheit in den Druckwasser-Kreislauf (B) zurückgeführt wird. Dadurch wird sichergestellt, dass bei Leckagen im Wärmeaustauscher des Verbrauchers nur die relativ geringe Kondensatmenge verunreinigt wird und separat abgeführt werden kann, so dass die grosse Menge des Druckwassers (B) nicht durch derartige Leckagen gefährdet wird und Schäden im Druckwasserkreislauf (B) vermieden werden.

Eine vorzugsweise Ausgestaltung besteht darin, dass der Wärmeaustauscher des Verbrauchers zur Beheizung von Verdampfern zur Aufkonzentrierung von wässerigen Lösungen verwendet wird. Insbesondere kommen als wässerige Lösungen Schwefelsäure oder Phosphorsäure enthaltende Lösungen in Frage.

Eine vorzugsweise Ausgestaltung besteht darin, dass dem Wärmeaustauscher des Verbrauchers ein Brüdenverdichter vorgeschaltet wird. Damit kann die Kondensations-Temperatur des aus dem Druckwasser (B) herstammenden Wasserdampfes erhöht werden, um entweder die Heizfläche des Wärmeaustauschers zu verringern oder die Temperatur des Mediums auf der Verbraucherseite zu erhöhen.

Die Erfingung wird anhand von Figuren und Beispielen näher erläutert.

Fig. 1: zeigt schematisch die erfindungsgemässe Arbeitsweise für einen Zwischen- oder Endabsorber;

Fig. 2: zeigt schematisch die Verbindung der Arbeitsweise bei einem Zwischen- und Endabsorber, bei der das Kühlmedium (B) in zwei Teilströmen parallel durch die Kühlmedien (A) sowohl des Zwischenabsorbers als auch des Endabsorbers weiter aufgeheizt wird.

Fig. 3: zeigt schematisch die Verbindung der Arbeitsweise bei einem Zwischen- und Endabsorber, bei der das Kühlmedium (B) nacheinander durch das Kühlmedium (A) des Endabsorbers und anschliessend durch das Kühlmedium (A) des Zwischenabsorbers aufgeheizt wird und wobei die Zwischenabsorption im Venturiabsorber erfolgt, der vorzugsweise zur Heissabsorption im Gleichstrom eingesetzt wird.

Fig. 4: zeigt in Ergänzung zu Fig. 1 schematisch die Arbeitsweise bei der adiabatischen Expansion des Kühlmediums (B), wobei der dabei gebildete Wasserdampf zur Beheizung des Verbrauchers verwendet und das Wasserdampfkondensat über eine Prüfstelle in das abgekühlte Kühlmedium (B) zurückgeleitet wird.

Fig. 5: zeigt in Ergänzung zu Fig. 2 schematisch die Arbeitsweise bei der adiabatischen Expansion des Druckwassers (B) in mehreren hintereinandergeschalteten Stufen sowie die Schaltung des Verbrauchers.

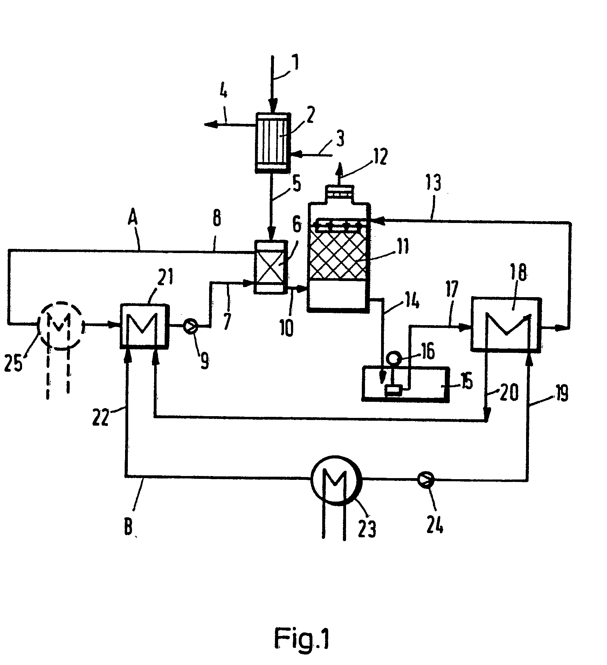

In Fig. 1 wird das $SO_3$-haltige Gass über Leitung 1 in den ersten indirekten Wärmeaustauscher 2 geleitet. Über Leitung 3 wird ein Kühlmittel zugeführt und über Leitung 4 abgeführt.

Das vorgekühlte $SO_3$-haltige Gas wird über Leitung 5 in den zweiten indirekten Wärmeaustauscher 6 geleitet, in den das Kühlmedium (A) über Leitung 7 eingeführt und über Leitung 8 abgeführt wird. Das Kühlmedium (A) wird mittels Pumpe 9 im geschlossenen Kreislauf geführt. Das $SO_3$-haltige Gas wird über Leitung 10 in den Absorber 11 geführt. Nach der Absorption des $SO_3$-Gehaltes verlässt das Gas über Leitung 12 den Absorber 11. Die konzentrierte Schwefelsäure wird über Leitung 13 in den Absorber 11 eingedüst, über Leitung 14 in eine Pumpenvorlage 15 abgeleitet und mittels Pumpe 16 über Leitung 17 in den indirekten Säurewärmeaustauscher 18 und von dort in die Leitung 13 gefördert. Das Kühlmedium (B) wird über Leitung 19 in den Wärmeaustauscher 18, von dort über Leitung 20 in den indirekten Wärmeaustauscher 21 im Kreislauf des Kühlmediums (A) geleitet, von dort über Leitung 22 in den indirekten Wärmeaustauscher 23 des Verbrauchers und von dort mittels Pumpe 24 wieder in die Leitung 19. Im Wärmeaustauscher des zweiten Verbrauchers 25 wird der Dampf — wenn das Druckwasser (A) im Wärmeaustauscher 6 verdampft wird — kondensiert und das heisse Kondensat anschliessen in den Wärmeaustauscher 21 geleitet.

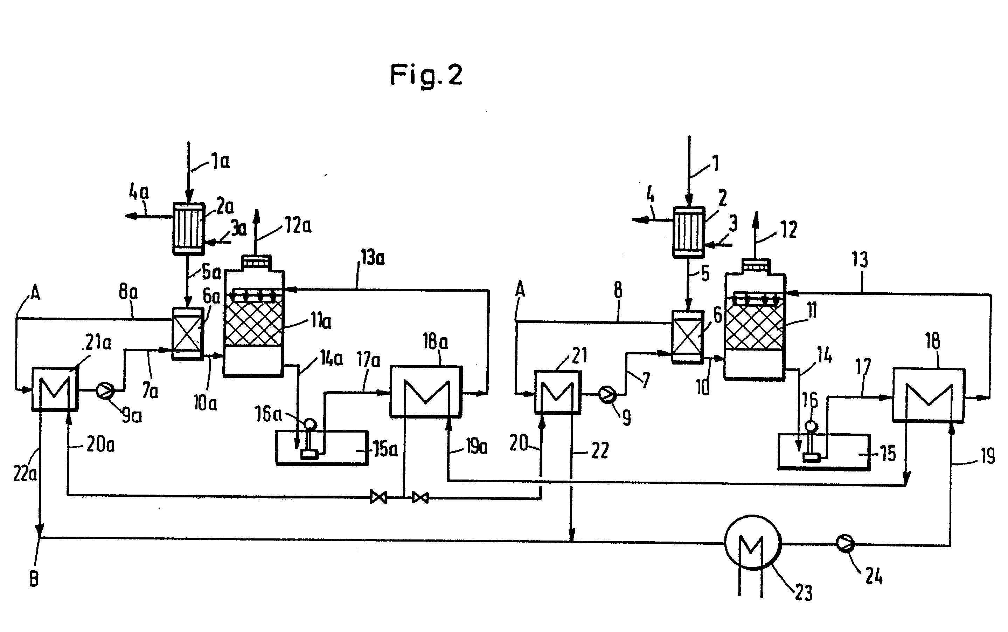

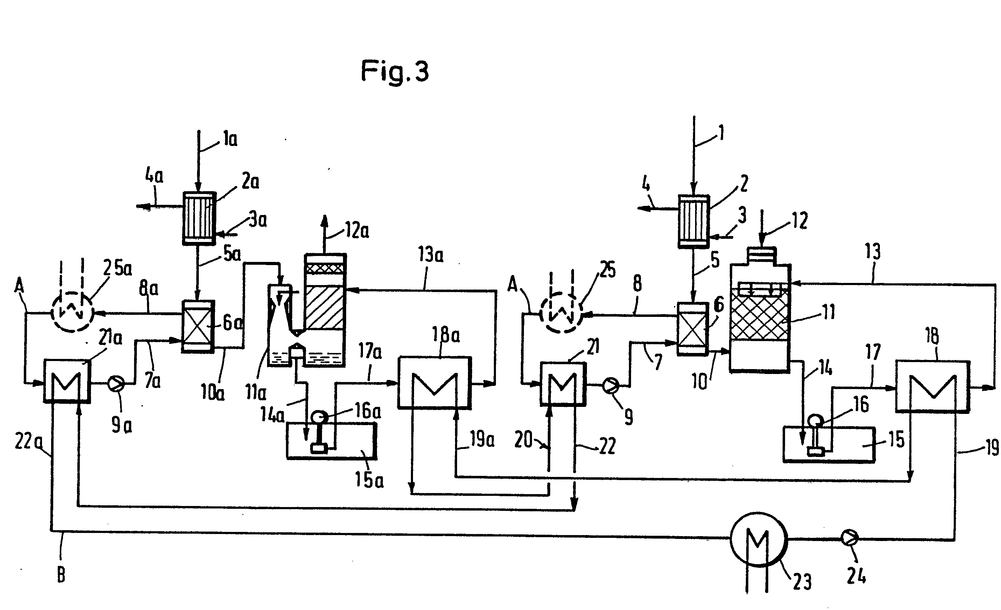

In Figur 2 und 3 sind die Positionen mit dem Zusatz «a» auf den Zwischenabsorber bezogen und die Positionen ohne «a» auf den Endabsorber. Die Pumpe 24 fördert das Kühlmedium (B) zunächst über Leitung 19 in den Säurewärmeaustauscher 18 der Endabsorption, dann über Leitung 19a in den Säurewärmeaustauscher 18a der Zwischenabsorption.

In Fig. 2 wird ein Teilstrom über Leitung 20a in den Wärmeaustauscher 21a der Zwischenabsorption und der andere Teilstrom über Leitung 20 in den Wärmeaustauscher 21 der Endabsorption geleitet. Beide Teilströme werden über Leitungen 22 und 22a vor dem Wärmeaustauscher 23 vereinigt.

In Fig. 3 wird das Kühlmedium (B) aus dem Wärmeaustauscher 18a über Leitung 20 in den indirekten Wärmeaustauscher 21 im Kreislauf des Kühlmediums (A) geleitet, von dort über Leitung 22 in den indirekten Wärmeaustauscher 21a der Zwischenabsorption, von dort über Leitung 22a in den Wärmeaustauscher 23 des Verbrauchers und von dort mittels Pumpe 24 wieder in die Leitung 19.

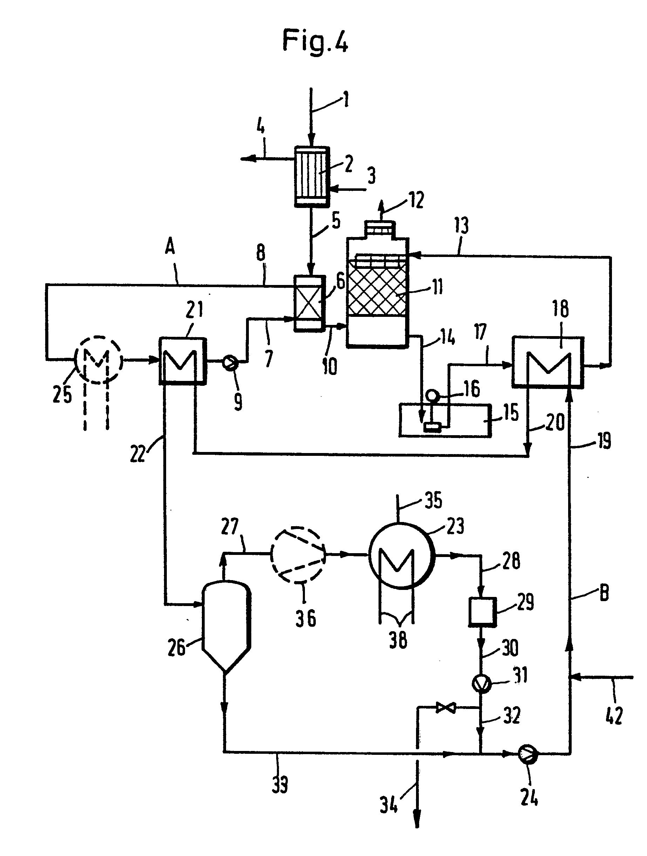

In Fig. 4 wird das aufgeheizte Druckwasser über Leitung 22 einem Entspannungsbehälter 26 zugeführt und hier adiabatisch entspannt. Das aus dem Entspannungsbehälter 26 durch Leitung 33 abfliessende Druckwasser wird mit Pumpe 24 über Leitung 19 zum Wärmeaustauscher 18 gefördert. Der bei der adiabatischen Expansion im Entspannungsbehälter 26 gebildete Wasserdampf strömt über Leitung 27 zum Verbraucher 23, vor dem ein Brüdenverdichter 36 in der Leitung 27 installiert sein kann. Der Verbraucher 23 wird über Leitung 35 entlüftet, zum Ausgleich für die hierbei abgeführte Wassermenge wird Zusatzwasser über Leitung 42 in Leitung 19 eingespeist. Das im Verbraucher 23 anfallende Wasserdampf-Kondensat wird über Leitung 28 zu einem Reinheitsprüfer 29 geleitet, der als pH-Wert-Messgerät oder Leitfähigkeits-Messgerät ausgeführt sein kann. Durch den Wärmeaustauscher des Verbrauchers 23 fliesst das Wärme aufnehmende Medium 38. Vom Reinheitsprüfer 29 fliesst das Kondensat über Leitung 30, Pumpe 31 und Leitung 32 in Leitung 33 des Druckwasserkreislaufes, sofern das Kondensat nicht durch Leckage im Verbraucher 23 verunreinigt ist. Andernfalls wird es über Leitung 34 abgeleitet.

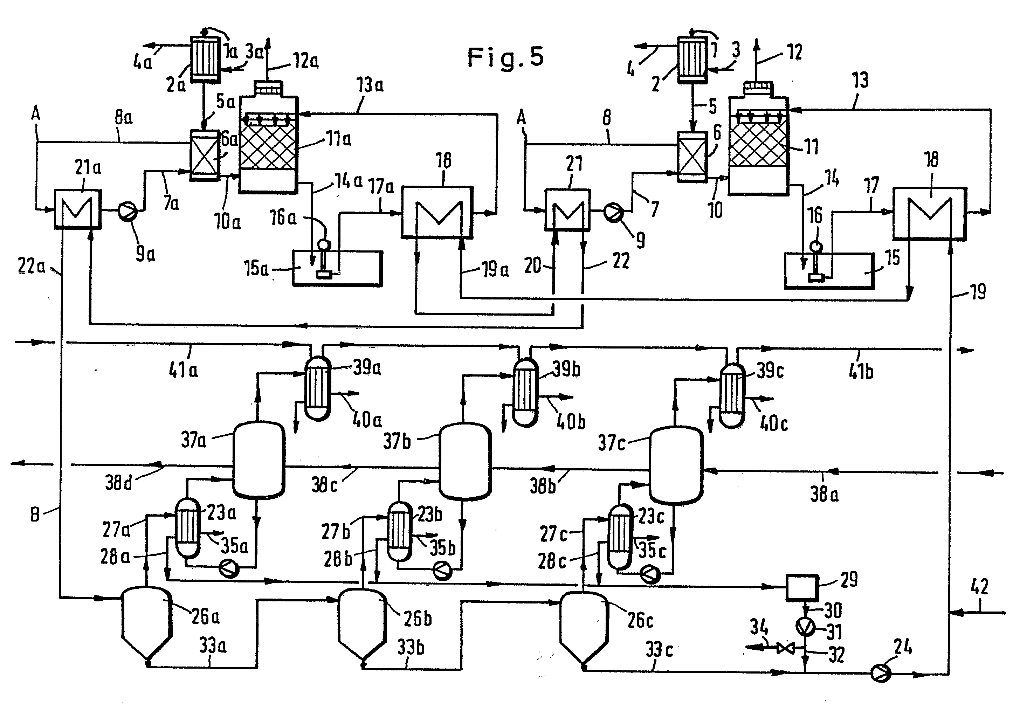

Fig. 5 zeigt eine mehrstufige Anordnung auf seiten des Druckwassers und auf seiten des Verbrauchers. Als Beispiel sind 3 Stufen dargestellt, jedoch ist eine höhere oder geringere Anzahl von Stufen möglich, die von Fall zu Fall festgelegt werden muss. Das aufgeheizte Druckwasser kommt über Leitung 22a vom Wärmeaustauscher 21a und durchfliesst nacheinander die Entspannungsbehälter 26a, 26b und 26c, die durch Wasserleitungen 33a und 33b verbunden sind. Aus dem letzten Entspannungsbehälter 26c fliesst das Druckwasser über Leitung 31c zur Pumpe 24, die das abgekühlte Druckwasser über Leitung 19 zum Wärmeaustauscher 18 fördert. In den Entspannungsbehältern 26a, 26b und 26c wird das Druckwasser adiabatisch entspannt und der dabei erzeugte Wasserdampf über Leitungen 27a, 27b und 27c zur Beheizung den Wärmeaustauschern 23a, 23b und 23c zugeführt, die über Leitungen 35a, 35b und 35c entlüftet werden. Zum Ausgleich für die Wassermengen, die bei der Entlüftung über Leitungen 35a/35b und 35c abgeführt werden, wird Zusatzwasser über Leitung 42 in die Leitung 19 eingespeist. Das bei der Wasserdampfkondensation in den Wärmeaustauschern 23a, 23b und 23c entstehende Kondensat wird aus denselben über Leitungen 28a, 28b und 28c abgeführt und im Reinheitsprüfer 29 überprüft. Bei festgestellter Reinheit wird das Kondensat vom Reinheitsprüfer 29 über Leitung 30 mittels Pumpe 31 und Leitung 32 in die Leitung 33c des Druckwasserkreislaufes zurückgefördert, andernfalls über Leitung 34 abgeleitet. Die Wärmeaustauscher 23a, 23b und 23c sind mit Verdampfern 37a, 37b und 37c verbunden, durch die eine wässerige Lösung über Rohrleitungen 38a, 38b, 38c und 38d in der genannten Reihenfolge fliesst. Durch die bei der Wasserdampfkondensation in den Wärmeaustauschern 23a, 23b und 23c zugeführte Energie wird Wasserdampf-Brüden aus der Lösung ausgedampft, wozu in den Verdampfern 37a, 37b und 37c jeweils ein entsprechender Druck gehalten wird. Der Brüden wird in Kondensatoren 39a, 39b und 39c mit Kühlwasser kondensiert und die Kondensatoren über Leitungen 40a, 40b und 40c entlüftet. Das Kühlwasser wird über Leitung 41a zugeführt und über Leitung 41b abgeführt. Durchfliesst das Kühlwasser die Kondensatoren nacheinander, erfolgt der Durchlauf desselben zweckmässig in der Reihenfolge 39a, 39b und 39c im Gegenstrom zur Lösung und im Gleichstrom mit dem Druckwasser. Bei diesen Fliessrichtungen von Druckwasser, Lösung und Kühlwasser ergibt sich eine max. Ausnutzung des vorhandenen Temperaturgefälles, d.h. kleine Wärmeaustauschflächen, unter Berücksichtigung der ansteigenden Siedepunkterhöhung bei zunehmender Konzentration der Lösung.

In der Tabelle I sind vier Beispiele zu den Figuren 1 und 3 aufgeführt. Die Beispiele beziehen sich auf Schwefelsäureanlagen mit einer Produktionsleistung von 1000 t $H_2SO_4$ pro Tag.

In der Tabelle II sind zwei Beispiele zu den Figuren 4 und 5 aufgeführt. Die Beispiele beziehen sich auf die Ausgestaltung des Verbrauchers.

Beispiel 1 bezieht sich auf eine Normalkatalyse, die für kalt anfallende Röstgase mit 8 Vol.-% $SO_2$ ausgelegt ist und auf einem 4-Horden-Kontakt basiert.

Beispiel 2 bezieht sich auf eine Doppelkatalyse für die Verarbeitung heisser Schwefelverbrennungsgase mit 10 Vol.-% $SO_2$, basierend auf einem Kontaktsystem mit drei Horden vor und einer Horde nach der Zwischenabsorption.

Beispiel 3 bezieht sich auf eine Doppelkatalyse für die Verarbeitung von kalt anfallenden Röstgasen mit 8 Vol.-% $SO_2$, basierend auf einem Kontaktsystem mit drei Horden vor und einer Horde nach der Zwischenabsorption.

Beispiel 4 bezieht sich auf eine Doppelkatalyse für die Verarbeitung kalt anfallender Röstgase mit 16 Vol.-% $SO_2$, basierend auf einem Kontaktsystem mit drei Horden vor und zwei Horden nach der Zwischenabsorption.

Beispiel 5 zeigt die Verwendung der mit dem Druckwasser (B) zugeführten, nutzbaren Wärmeenergie zur Aufwärmung von anorganischer Säure.

Beispiel 6 zeigt die Verwendung der mit dem Druckwasser (B) zugeführten, nutzbaren Wärmeenergie zur Aufkonzentrierung von Phosphorsäure von 27% $P_2O_5$ auf 54% $P_2O_5$ in mehrstufiger Anordnung.

*(Tabellen auf der nächsten Seite)*

Die Vorteile der Erfindung bestehen hauptsächlich darin, dass die Temperatur des Kühlmediums (B) entweder über die im Säurewärmeaustauscher maximal erreichbare Temperatur erhöht werden kann oder aber eine gleiche Temperatur mit geringerem Aufwand erreicht werden kann. Durch den geschlossenen Kühlkreislauf (A) kann durch Regelung der Umlaufmenge des Kühlmediums mit Sicherheit eine Unterschreitung des Taupunktes vor der $SO_3$-Absorption — auch bei Betriebsänderungen der Kontaktanlage — vermieden werden. Der Säurewärmeaustauscher kann mit niedrigeren Temperaturen betrieben werden.

*Tabelle I*

| Position | Beispiel Nr.<br>vrgl. Fig. Nr. | | 1<br>1 | 2<br>2 | 3<br>3 | 4<br>3 |
|---|---|---|---|---|---|---|
| 1 | Gasmenge | Nm³/h | 113 742 | 79 279 | 103 240 | 45 366 |
|  | $SO_3$-Gehalt | Vol % $SO_3$ | 8,2 | 0,7 | 0,6 | 0,7 |
|  | Gastemperatur | °C | 425 | 430 | 439 | 426 |
| 5 | Gastemperatur | °C | 326 | 240 | 260 | 389 |
| 7 | Kreislauf-Medium |  | Wasser | Wasser/Dampf | Wasser | Wasser |
|  | Temperatur | °C | 140 | 120 | 130 | 130 |
| 8 | Temperatur | °C | 160 | 130 | 160 | 160 |
| 10 | Gastemperatur | °C | 160 | 140 | 140 | 140 |
| 13 | $H_2SO_4$-Temperatur | °C | 70 | 70 | 70 | 70 |
| 14 | $H_2SO_4$-Temperatur | °C | 90 | 90 | 90 | 90 |
| 19 | Wassertemperatur | °C | 60 | 60 | 60 | 60 |
| 19a | Wassertemperatur | °C |  | 67 | 78 | 77 |
| 20 | Wassertemperatur | °C | 83 | 102 | 120 | 120 |
| 22 | Wassertemperatur | °C | 94 | 110 | 136 | 137 |
| 1a | Gasmenge | Nm³/h | — | 88 905 | 111 283 | 45 924 |
|  | $SO_3$-Gehalt | Vol % $SO_3$ | — | 9,9 | 7,8 | 15,2 |
|  | Gastemperatur | °C | — | 475 | 470 | 530 |
| 5a | Gastemperatur | °C | — | 198 | 222 | 379 |
| 7a | Kreislaufmedium |  | — | Wasser/Dampf | Wasser | Wasser |
|  | Temperatur | °C | — | 130 | 150 | 150 |
| 8a | Temperatur | °C | — | 140 | 180 | 180 |
| 10a | Gastemperatur | °C | — | 160 | 160 | 170 |
| 12a | Gastemperatur | °C | — | 90 | 140 | 140 |
| 13a | $H_2SO_4$-Temperatur | °C | — | 90 | 120 | 120 |
| 14a | $H_2SO_4$-Temperatur | °C | — | 110 | 140 | 140 |
| 20a | Wassertemperatur | °C | — | 102 | — | — |
| 22a | Wassertemperatur | °C | — | 110 | 146 | 158 |
| 23 | Wärmemenge | GJ/h | 87 | 87 | 78 | 80 |

*Tabelle II*

| Position | Beispiel Nr.<br>vrgl. Fig. Nr. | | 5<br>4 | 6<br>5 |
|---|---|---|---|---|
| 22 | Kreislaufmedium | °C | Wasser | — |
|  | Temperatur |  | 94 | — |
| 33 | Temperatur | °C | 60 | — |
| 27 | Temperatur | °C | 60 | — |
| 28 | Temperatur | °C | 60 | — |
| 38 | Beheiztes Medium |  | Anorg. Säure | — |
|  | Erwärmung des Mediums | °C | 35 | — |
| 23 | Wärmemenge | GJ/h | 87 | — |
| 22a | Kreislaufmedium | °C | — | Wasser |
|  | Temperatur |  | — | 110 |
| 33a | Temperatur | °C | — | 91,9 |
| 33b | Temperatur | °C | — | 71,9 |
| 33c | Temperatur | °C | — | 60 |
| 38a | Wässerige Lösung |  | — | Phosphorsäure |
|  | Konzentration | % $P_2O_5$ | — | 27 |
|  | Temperatur | °C | — | 50 |
| 38b | Temperatur | °C | — | 50 |
| 38c | Temperatur | °C | — | 55 |
| 38d | Konzentration | % $P_2O_5$ | — | 54 |
|  | Temperatur | °C | — | 76,5 |
| 30 | Medium | °C | — | Kondensat |
|  | Temperatur |  | — | 60 |
| 41a | Medium | °C | — | Kühlwasser |
|  | Temperatur |  | — | 23 |
| 41b | Temperatur | °C | — | 33 |
| 23a+23b+23c | Wärmemenge | GJ/h | — | 87 |

**Patentansprüche**

1. Verfahren zur Herstellung von Schwefelsäure aus SO₂-haltigen Gasen durch katalytische Umsetzung von SO₂ zu SO₃, mehrstufige Kühlung der SO₃-haltigen Gase vor einer Absorption des SO₃ in konzentrierter Schwefelsäure, wobei Wärme aus dem Schwefelsäurekreislauf der Absorption durch indirekten Wärmeaustausch an ein Kühlmedium übertragen wird, das Kühlmedium im Kreislauf geführt wird, und aus dem Kreislauf des Kühlmediums Wärme durch indirekten Wärmeaustausch an einen Verbraucher abgeführt wird, dadurch gekennzeichnet, dass die SO₃-haltigen Gase vor dem Eintritt in die Absorption zunächst durch indirekten Wärmeaustausch abgekühlt und dann durch indirekten Wärmeaustausch mit einem im geschlossenen Kreislauf geführten Kühlmedium (A) auf eine Temperatur kurz oberhalb des Taupunktes der SO₃-haltigen Gase abgekühlt werden, der Schwefelsäurekreislauf der Absorption durch indirekten Wärmeaustausch mit einem im geschlossenen Kreislauf geführten flüssigen Kühlmedium (B) abgekühlt wird, das aufgeheizte flüssige Kühlmedium (B) durch indirekten Wärmeaustausch mit dem aufgeheizten Kühlmedium (A) weiter aufgeheizt wird, und das heisse Kühlmedium (B) durch indirekten Wärmeaustausch mit dem Verbraucher abgekühlt wird.

2. Verfahren nach Anspruch 1, dadurch gekennzeichnet, dass das flüssige Kühlmedium (B) aus Druckwasser besteht.

3. Verfahren nach Anspruch 1 oder 2, dadurch gekennzeichnet, dass das Kühlmedium (A) aus Druckwasser besteht.

4. Verfahren nach Anspruch 3, dadurch gekennzeichnet, dass das Druckwasser des Kühlmediums (A) beim indirekten Wärmeaustausch vollständig verdampft wird und der Dampf durch den indirekten Wärmeaustausch mit dem Kühlmedium (B) kondensiert wird.

5. Verfahren nach Anspruch 3, dadurch gekennzeichnet, dass das Druckwasser des Kühlmediums (A) beim indirekten Wärmeaustausch vollständig verdampft wird, der Dampf im Wärmeaustausch mit einem zweiten Verbraucher kondensiert wird und das heisse Kondensat zur Aufheizung des Kühlmediums (B) verwendet wird.

6. Verfahren nach einem der Ansprüche 1 bis 5, dadurch gekennzeichnet, dass das Kühlmedium (A) mit einer Temperatur von 120 bis 180° C in den indirekten Wärmeaustausch mit den SO₃-haltigen Gasen eingeleitet und im Gegenstrom geführt wird.

7. Verfahren nach einem der Ansprüche 1 bis 6, dadurch gekennzeichnet, dass bei einer kalt betriebenen Endabsorption das Kühlmedium (B) mit dem Schwefelsäurekreislauf des Zwischenabsorbers aufgeheizt wird und anschliessend mit dem Kühlmedium (A) der Endabsorption und dem Kühlmedium (A) der Zwischenabsorption weiter aufgeheizt wird.

8. Verfahren nach Anspruch 7, dadurch gekennzeichnet, dass das Kühlmedium (B) vor der Aufheizung mit dem Schwefelsäurekreislauf der Zwischenabsorption zuerst mit dem Schwefelsäurekreislauf der Endabsorption aufgeheizt wird.

9. Verfahren nach einem der Ansprüche 2 bis 8, dadurch gekennzeichnet, dass das aufgeheizte Druckwasser (B) beim Verbraucher adiabatisch entspannt wird und der dabei gebildete Wasserdampf im Wärmeaustauscher des Verbrauchers kondensiert wird.

10. Verfahren nach Anspruch 9, dadurch gekennzeichnet, dass die adiabatische Entspannung des Druckwassers in mehreren, im Wasserkreislauf hintereinandergeschalteten Stufen erfolgt und der in den einzelnen Stufen erzeugte Wasserdampf getrennt in separaten Wärmeaustauschern von Verbrauchern kondensiert wird.

11. Verfahren nach Anspruch 10, dadurch gekennzeichnet, dass die Wärmeaustauscher des Verbrauchers hintereinandergeschaltet werden und das Wärmeenergie aufnehmende Medium des Verbrauchers die Wärmeaustauscher in Richtung steigender Temperatur des wärmeenergie aufnehmenden Mediums im Gegenstrom zum Medium (B) durchläuft.

12. Verfahren nach einem der Ansprüche 9 bis 11, dadurch gekennzeichnet, dass das im Wärmeaustauscher des Verbrauchers anfallende Kondensat gesammelt, auf Reinheit geprüft und nur bei Reinheit in den Druckwasserkreislauf (B) zurückgeführt wird.

13. Verfahren nach einem der Ansprüche 9 bis 12, dadurch gekennzeichnet, dass der Wärmeaustauscher des Verbrauchers zur Beheizung von Verdampfern zur Aufkonzentrierung von wässerigen Lösungen verwendet wird.

14. Verfahren nach einem der Ansprüche 9 bis 13, dadurch gekennzeichnet, dass dem Wärmeaustauscher des Verbrauchers ein Brüdenverdichter vorgechaltet wird.

**Claims**

1. A process of producing sulfuric acid from SO₂-containing gases comprising a catalytic reaction to convert SO₂ to SO₃, a multi-stage cooling of the SO₃-containing gases before an absorption of SO₃ in concentrated sulfuric acid, a transfer of heat from the sulfuric acid circulated through the absorber to a cooling fluid by an indirect heat exchange, a circulation of the cooling fluid, and a transfer of heat from the cooling fluid cycle to a consumer by an indirect heat exchange, characterized in that the SO₃-containing gases before entering the absorber are first cooled by an indirect heat exchange and are subsequently cooled to a temperature slightly above the dew point temperature of the SO₃-containing gases by an indirect heat exchange with a cooling fluid (A), which is conducted in a closed cycle, the sulfuric acid circulating through the absorber is cooled by an indirect heat exchange with a liquid cooling fluid (B), which is conducted in a closed cycle, the liquid cooling fluid (B) which has been heated is heated further by an indirect heat exchange with the heated cooling fluid (A), and the hot cooling fluid (B) is cooled by an indirect heat exchange with the consumer.

2. A process according to claim 1, characterized in that the liquid cooling fluid (B) consists of pressurized water.

3. A process according to claim 1 or 2, characterized in that the cooling fluid (A) consists of pressurized water.

4. A process according to claim 3, characterized in that the pressurized water used as cooling fluid (A) is entirely evaporated by the indirect heat exchange and the steam is condensed by the indirect heat exchange with cooling fluid (B).

5. A process according to claim 3, characterized in that the pressurized water used as cooling fluid (A) is entirely evaporated by the indirect heat exchange, the steam is condensed by a heat exchange with a second consumer, and the hot condensate is used to heat the cooling fluid (B).

6. A process according to any of claims 1 to 5, characterized in that the cooling fluid (A) is supplied at a temperature of 120 to 180 °C to the indirect heat exchange with the $SO_3$-containing gases and is conducted countercurrently to the latter.

7. A process according to any of claims 1 to 6, characterized in that the end absorption is effected at a low temperature, the cooling fluid (B) is heated by the sulfuric acid circulated through the interstage absorber and is subsequently heated further with the cooling fluid (A) associated with the absorber and with the cooling fluid (A) associated with the interstage absorber.

8. A process according to claim 7, characterized in that the cooling fluid (B) before being heated with the sulfuric acid circulated through the interstage absorber is heated with the sulfuric acid circulated through the end absorber.

9. A process according to any of claims 2 to 8, characterized in that the pressurized water (B) which has been heated is subjected to an adiabatic pressure relief at the consumer and the resulting water vapor is condensed in the heat exchanger of the consumer.

10. A process according to claim 9, characterized in that adiabatic pressure relief of the pressurized water is effected in a plurality of stages, which are connected in series in the water cycle, and the water vapor produced in the several stages is separately condensed in separate condensers of consumers.

11. A process according to claim 10, characterized in that the heat exchangers of the consumer are connected in series and the heat-receiving fluid of the consumer flows through the heat exchangers in the direction of a rising temperature of the heat-receiving fluid and countercurrently to the fluid (B).

12. A process according to any of claims 9 to 11, characterized in that the condensate which becomes available in the heat exchanger of the consumer is collected and tested for purity and only when it is pure is recycled to the cycle of the pressurized water (B).

13. A process according to any of claims 9 to 12, characterized in that the heat exchanger of the consumer is used to heat evaporators for increasing the concentration of aqueous solutions.

14. A process according to any of claims 9 to 13, characterized in that the heat exchanger of the consumer is preceded by a vapor compressor.

**Revendications**

1. Procédé de préparation d'acide sulfurique à partir de gaz contenant du $SO_2$, par transformation catalytique du $SO_2$ en $SO_3$, par refroidissement en plusieurs stades des gaz contenant le $SO_3$ avant une absorption du $SO_3$ dans de l'acide sulfurique concentré, la chaleur provenant du circuit d'acide sulfurique de l'absorption étant transmise par échange de chaleur indirect à un milieu réfrigérant, le milieu réfrigérant circulant suivant un circuit et la chaleur provenant du circuit du milieu réfrigérant étant cédée par échange de chaleur indirect à une unité consommatrice, caractérisé en ce qu'il consiste à refroidir les gaz contenant du $SO_3$ avant l'entrée dans l'absorption, d'abord par échange de chaleur indirect, et ensuite à les refroidir, par échange de chaleur indirect avec un milieu réfrigérant (A) circulant en circuit fermé, à une température supérieure de peu au point de rosée des gaz contenant du $SO_3$, à refroidir le circuit d'acide sulfurique de l'absorption par échange de chaleur indirect avec un milieu réfrigérant (B) liquide circulant en circuit fermé, à chauffer davantage, par échange de chaleur indirect avec le milieu réfrigérant (A) chauffé, le milieu réfrigérant (B) liquide chauffé, et à refroidir le milieu réfrigérant chaud (B) par échange de chaleur indirect avec l'unité consommatrice.

2. Procédé suivant la revendication 1, caractérisé en ce que le milieu réfrigérant liquide (B) est de l'eau sous pression.

3. Procédé suivant la revendication 1 ou 2, caractérisé en ce que le milieu réfrigérant (A) est de l'eau sous pression.

4. Procédé suivant la revendication 3, caractérisé en ce qu'il consiste à évaporer entièrement l'eau sous pression du milieu réfrigérant (A) lors de l'échange de chaleur indirect et à condenser la vapeur par l'échange de chaleur indirect avec le milieu réfrigérant (B).

5. Procédé suivant la revendication 3, caractérisé en ce qu'il consiste à évaporer entièrement l'eau sous pression du milieu réfrigérant (A) lors de l'échange de chaleur indirect, à condenser la vapeur par échange de chaleur avec une seconde unité consommatrice, et à utiliser le condensat chaud pour réchauffer le milieu réfrigérant (B).

6. Procédé suivant l'une des revendications 1 à 5, caractérisé en ce qu'il consiste à envoyer le milieu réfrigérant (A), à une température de 120 à 180° C, à l'échange de chaleur indirect avec les gaz contenant du $SO_3$, et à le faire passer à contre-courant.

7. Procédé suivant l'une des revendications 1 à 6, caractérisé en ce qu'il consiste, dans le cas d'une absorption finale effectuée à froid, à chauffer le milieu réfrigérant (B) par le circuit d'acide sulfurique de l'absorbeur intermédiaire, et ensuite à le chauffer davantage par le milieu réfrigérant (A) de l'absorption finale et par le milieu réfrigérant (A) de l'absorption intermédiaire.

8. Procédé suivant la revendication 7, caractérisé en ce qu'il consiste à chauffer le milieu réfrigérant (B) d'abord par le circuit d'acide sulfurique de l'absorption finale, avant le chauffage par le circuit d'acide sulfurique de l'absorption intermédiaire.

9. Procédé suivant l'une des revendications 2 à 8, caractérisé en ce qu'il consiste à détendre adiabatiquement l'eau sous pression chauffée (B) dans l'unité consommatrice et à condenser la vapeur d'eau formée dans l'échangeur de chaleur de l'unité consommatrice.

10. Procédé suivant la revendication 9, caractérisé en ce qu'il consiste à effectuer la détente adiabatique de l'eau sous pression en plusieurs étages en série dans le circuit d'eau, et à condenser séparément la vapeur d'eau produite dans les divers étages dans des échangeurs de chaleur distincts d'unités consommatrices.

11. Procédé suivant la revendication 10, caractérisé en ce qu'il consiste à monter les échangeurs de chaleur de l'unité consommatrice en série et à faire passer le milieu de l'unité consommatrice absorbant l'énergie calorifique dans les échangeurs de chaleur suivant la direction de la température croissante du milieu absorbant l'énergie calorifique, à contre-courant du milieu (B).

12. Procédé suivant l'une des revendications 9 à 11, caractérisé en ce qu'il consiste à rassembler le condensat se produisant dans l'échangeur de chaleur de l'unité consommatrice, à en vérifier la pureté et à ne le retourner dans le circuit d'eau sous pression (B) que s'il est pur.

13. Procédé suivant l'une des revendications 9 à 12, caractérisé en ce qu'il consiste à utiliser l'échangeur de chaleur de l'unité consommatrice pour le chauffage d'évaporateurs désignés à concentrer des solutions aqueuses.

14. Procédé suivant l'une des revendications 9 à 13, caractérisé en ce qu'il consiste à monter en amont de l'échangeur de chaleur de l'unité consommatrice un compresseur de buées.

Fig.1

Fig.2

# Fig.3

# Fig.4

Fig.5